# EUROPEAN PATENT APPLICATION

(11) **EP 4 129 571 A1**
(43) Date of publication of application: **08.02.2023**
(21) Application number: 22187376.3
(22) Date of filing: 28.07.2022
(51) Int. Cl.: B24C 3/12, B24C 3/32, B24C 9/00, H01M 4/04, B24C 1/04

(54) **PROCESS ARRANGEMENT FOR THE PRODUCTION OF ACTIVE MATERIAL LAYERS FOR A LITHIUM-ION BATTERY CELL**

(30) Priority: 05.08.2021 IN 202141035290
(71) Applicant: Volkswagen AG, 38436 Wolfsburg (DE)
(72) Inventor: Jamadar, Kartik, 38442 Wolfsburg (DE); Gangurde, Priyanka, 422006 Nashik (IN)
(74) Representative: Bierschneider, Walter

(57) **Abstract**

The invention relates to a process arrangement for producing active material layers (1), for example electrode layers or separator layers, for a lithium-ion battery cell, in which an active material ribbon (3) can be guided in a continuous process in a production direction (FR) through a cutting system (7) which has a longitudinal cutting station (9), in which the active material ribbon (3) can be divided into strip-shaped ribbon segments (25) in the transverse direction of the active material ribbon (3), a profiling station (11), in which recesses (53), for example edgeside current collecting recesses, are cut into the active material ribbon (3), and/or a length cutting station (13), in which the active-material ribbon (3) is cut to form individual active-material layers (1). According tot he invention, the cutting operation in the cutting system (7) is carried out by liquid-jet cutting, wherein the cutting system (7) has liquid-jet cutting nozzles (21) as cutting elements.

## Description

The invention relates to a process arrangement for the production of active material layers, for example electrode layers or separator layers, for a lithium-ion battery cell according to the generic term of claim 1, as well as a method for the production of such active material layers.

In a cell housing of a lithium-ion battery cell, for example a prismatic cell or a pouch cell, the active material may be arranged in the form of a layer stack consisting of active material layers, namely electrode layers and separator layers, stacked on top of each other.

The active material layers can be produced in a generic process arrangement. In the process arrangement, an active material ribbon is guided through a cutting system in a continuous process in one production direction. The cutting system can consist of a slitting station (also referred to as longitudinal cutting station), a notching station (also referred to as profiling station) and/or a trimming station (also referred to as length cutting station). In the longitudinal cutting station, the active material ribbon is divided into strip-shaped ribbon segments in the transverse direction of the active material ribbon. In the profiling station, recesses, for example edge-side current collecting recesses, can be cut into the active material ribbon. In the cutting station, the active material ribbon is cut to individual active material layers.

The state of the art slitting process for lithium-ion battery electrodes uses the shear principle, where the upper cutter is in contact with the lower cutter. This leads to high friction resulting in faster tool wear. Slitting at high speeds enlarges this problem. That is why currently the slitting speed is restricted to a maximum of 120 m/min. The slitting process is carried out by upper and lower circular knives made of tungsten carbide. These knives need to be reground approximately after 200 km. Having to regrind the cutters that often results in high operating costs. Notching and electrode separation are carried out as separate operations after the slitting process. It is either done mechanically or by laser. Due to the separate machinery for slitting and notching, a higher invest and footprint is needed. Laser notching is an energy intensive process (~ 6 kW equipment power requirement) and creates a heat affected zone. Active material in heat affected zone gets burnt, reducing battery capacity. The laser process is inefficient as most of the concentrated light rays get reflected from the copper surface. One needs a special green laser to have a better light adsorption by copper. This type of laser is expensive and does not permit higher speeds than 80 m/min. Mechanical notching has a high tool wear. Additionally, the electrode coil feed needs to be stopped at regular intervals in order to carry out the process step. This causes reduced notching speeds. The movement of the electrode in z-direction (direction of thickness) during the slitting process causes waves at the slitting edge. It is not possible to control this waviness, as there is no counter tooling. There is no restriction of the electrode movement within the y-direction (width direction). This results in waviness in y-direction. Due to the absence of a counter force in slitting and mechanical notching, there is burr formation. This creates short circuit in battery. Active material sticks to the cutting edges. This needs extensive cleaning of cutting edge and also cutter. Adhesion of particle more than 10 micron can cause short circuit in the cell. In short, cutting by tool (mechanical cutting) or cutting by energy (laser) have many drawbacks, which affects cutting speed, increases cost, reduces battery capacity and reduces battery safety.

A liquid jet cutting arrangement is known from US 2013 0324013 A1. A method for producing a battery cell is known from US 2013 0298387 A1.

The object of the invention is to provide a process arrangement and a method for the production of active material layers for a lithium-ion battery cell, in which the process effort for the production of the active material layers is reduced compared to the prior art.

The object is solved by the features of claim 1. Preferred further embodiments of the invention are disclosed in the subclaims.

The invention starts from a process arrangement in which a continuous active material ribbon wound on a roll is provided. The active material ribbon is guided in a continuous process in a production direction through a cutting system. The cutting system can comprise a slitting station (longitudinal cutting station), a notching station (profiling station) and/or a trimming station (length cutting station). In the longitudinal cutting station, the active material ribbon can be divided into strip-shaped ribbon segments in the transverse direction of the active material ribbon. In the profiling station, recesses, for example edge-side current collecting recesses, can be cut into the active material ribbon. In the length cutting station, the active material ribbon can be cut into individual active material layers. According to the characterising part of claim 1, the cutting operation in the cutting system is no longer performed mechanically, but rather by liquid jet cutting. For this purpose, the cutting system may comprise at least one liquid jet cutting nozzle as cutting element.

In the following description, the term "slitting" is also referred to as "longitudinal cutting", whereas the term "notching" is also referred to as "profiling" and the term "trimming" is also referred to as "length cutting"

The main innovations of the present invention are explained briefly as follows: Instead of slitting and notching with mechanical cutting (using shearing principle by cutting tool) or by energy (laser), here cutting is done by using high velocity fluid medium. Here modified fluid jet cutting process is suggested for cutting battery electrode and separator. In modified fluid jet cutting, cutting force is either applied by narrow stream of fluid moving with high velocity. Here it is possible to add abrasive particle in fluid. Abrasive suggested is Aluminum oxide. It is also possible to carry out cutting without abrasives. Nozzle geometry is modified such that abrasive enter into divergent zone. Modified nozzle geometry is shown in detail. Fluid jet cutting uses liquid carbonate as fluid medium. Carbonate preferred is Ethylene carbonate, which is also one of the constituent of electrolyte in Li-Ion battery. In Slitting nozzle for fluid jet cutting is stationary and electrode moves at high speed (more than 200 m/min). Process of slitting is modified by applying stretching to the electrode by rollers. In Notching both nozzle and electrode are moving at the same speed. Hence there is no relative movement. This way transverse cut at high speed is possible. Modified notching tooling is explained further below in detail. During trimming electrode is cut with fluid jet process and then trimmed segment is placed in magazine. Water (with and without abrasive) as fluid medium is explained as option. Here drying process after slitting is essential. Roll to roll drying process is suggested so that fluid on the electrode edge will be evaporated in short time. Fluid jet cutting process can do slitting and trimming of separator same as electrode. Filtration and cleaning of fluid by centrifugal cleaning process is shown. This new cleaning process can remove heavy copper and cathode active particles from fluid. Next step cleaning by fine filtration will remove graphite and binder from fluid. Fluid jet cutting process is ideal process for cutting battery electrode, as it is burr free cutting process. There is no wear of cutting tool and high cutting speed is possible.

Lithium-ion battery performance is affected by cut surface quality during the electrodes cutting process. Currently shearing by rotating knives have been used to slit prismatic and cylindrical electrodes. Shearing process require expensive tooling that wear out over time. Maximum speed up to 120 m/min is possible. Tool wear and vibration causes process instability and poor cut quality. These will cause an internal short circuit and significant heat generation in the cells. Laser cutting, proven and widely utilized in the industry, can solve the above-mentioned problems by improving cut surface quality. It has advantages like no tool wear, narrow heat affected zone and applicability to nearly all materials. But in laser cutting, there are some problems as mentioned earlier. Mainly energy efficiency is less due to reflection. Maximum speed up to 80m/min is possible. To overcome it a new method is employed called fluid jet cutting. Here it is possible to have high speed up to 200 m/min. In addition, no tool wear, no burrs and no heat affected zone. Current idea is focused in slitting, notching and trimming operation.

According to the invention, there are two variations for input to jet nozzle:
In the first variation only fluid is pressurized and supplied to jet nozzle, which is slitting of material after that the material is moved to the next stations for notching and for trimming. In the notching station, different fluid jet nozzles are connected to moving conveyor, which is used to notch and trim the electrode. After that, cutting edge is dried and then cleaning is carried out. As fluid medium, electrolyte can be used, which has a higher flash point. For that ethylene carbonate is suggested.

In the second variation ethylene carbonate (EC) is used as fluid medium. In addition, here abrasive material (aluminium oxide) is used. One of the main innovations is to use a constitute of electrolyte (ethylene carbonate) as a cutting medium. EC is anyway present in the cell and hence if EC remain in active material after cutting, then it is not problematic. On the other hand, water presence in active material is not desired hence extensive drying is required. Water as fluid medium can also be used and is suggested later as additional option but it is less preferred. Electrolyte in Li-Ion cell has Ethylene carbonate, Diethylene carbonate and Methylene carbonate as main component. Methylene carbonate and diethylene carbonate has low flash point and hence Ethylene carbonate is suggested as fluid medium for cutting. Aluminum oxide is also present in Li-Ion cell as separator coating. hence it is desirable to use aluminum oxide as abrasive in fluid jet cutting. It is advantageous to use EC as fluid medium and aluminum oxide as abrasive. This will reduce extensive drying and cleaning process of electrode. The same principle can also be used to cut separator.

An important benefit of the fluid jet is the ability to cut material without interfering with its inherent structure, as there is no heat-affected zone (HAZ). Minimizing the effects of heat allows metals to be cut without harming or changing intrinsic properties. Sharp corners, bevels, pierce holes, and shapes with minimal inner radii are all possible. Fluid jet cutting is capable of producing intricate cuts in material. With specialised software and 3-D machining heads, complex shapes can be produced. The width, of the cut can be adjusted by changing exit velocity of fluid in nozzle, as well as by changing the type and size of abrasive. Typical abrasive cuts have width in the range of 0.5-1 mm. Non-abrasive cuts are normally 0.2-0.3 mm, but can be as small as 0.1 mm, which is approximately that of a human hair. These small jets can permit small details in a wide range of applications. Normally this small width cut is necessary in battery electrode and hence fluid jet cutting is well suitable for cutting electrode and separator. Due to its relatively narrow width, fluid jet cutting can reduce the amount of scrap material produced by allowing uncut parts to be nested more closely together than traditional cutting methods. Fluid jet has advantage that there is no tooling contact and hence no wear of tooling. Cutting edge is also burr free, which is great advantage for battery electrode. Cutting edge quality of fluid jet depends on cutting speed.

The process of fluid jet cutting is based on material removal from the work piece by erosion. Fluid is the cutting medium. Abrasive particles can be added to the cutting efficiency. High velocity fluid jet accelerates abrasive particles that erode the material. In abrasive fluid jet cutting, pump via accumulator and tubing directs the pressurized fluid to the cutting head. Fluid is pressed out of the orifice in the form of jet. The result is a very thin, extremely high velocity fluid jet. Abrasive particles are metered from abrasive hopper to the cutting head. Abrasive particles are added in mixing chamber and mixed with the water jet in the nozzle (mixing tube, focusing tube). There are two ways to add abrasive particles in fluid. Abrasive can be added before nozzle or in convergent section. Here danger is that complete nozzle inner wall will be always in touch with abrasive particles. This will wear out nozzle faster.

Another option is to add abrasive particles in divergent chamber before orifice. The high speed of the fluid jet creates a venturi effect or vacuum in the mixing chamber, located immediately above the orifice, so that abrasive particles are sucked into the fluid jet in the mixing chamber. Abrasive particles go on interacting with the fluid jet and the inner walls of the nozzle, until they are accelerated using the momentum of the fluid jet. Here wear of tooling is less. Abrasive particles have lesser speed but for cutting thin electrode, it is sufficient. Abrasive particles mixed with the fluid jet create abrasive fluid jet. Nozzle directs the abrasive fluid jet to cut the work piece material. Abrasive fluid jet nozzle is stationery for slitting (longitudinal cut) and it is moving at the same speed as that of electrode for notching and trimming. In notching and trimming, abrasive fluid jet cutting head moves along the programmed contour using computer numerical control motion system of the machine. Nozzle is moving always at the same speed as that of electrode. A mesh is provided below the work piece to collect fluid, abrasive and metal chips (cutting scrap). Here the first filtration will take place and then coarse particles will be removed. Next filtration happens with innovative centrifugal separation as explained later. Abrasive particles will be reused if they are sharp enough. Filtered fluid will be circulated again.

As electrolyte, ethylene carbonate or a mixture of ethylene carbonate and diethylene carbonate can be used: Ethylene carbonate (EC) is heated to around 45 °C and used in molten state. It is important that heating of complete flow system of fluid take place so that there is no solidification of EC. Ethylene carbonate mixed with Diethylene carbonate (DEC) has lower flash point that pure EC. Based on the concentration of ethylene carbonate flash point of solution is much higher than pure diethylene carbonate. Ethylene carbonate is good soluble in diethylene carbonate.

In a further variation, ethylene carbonate is mixed with polypropylene carbonate (PC) so that mixture has melting point at room temperature. This reduces heating of complete flow path for fluid. In short, liquid carbonate which can dissolve EC and at the same time give reasonably high flash point of around 130°C is desirable. Or one can use mixture EC and other carbonate whose boiling point is below room temperature. This will ensue that mixture remains always in molten state. It is also possible to use pure water as fluid medium. Important is that after cutting, cutting edge should be dried to remove water content. This is explained as an option later.

Aluminum oxide (Al₂O₃), silicon carbide (SiC) and sodium bicarbonate are some of abrasives which can be used in abrasive fuel jet cutting. Selection of abrasives depends on material removal rate, type of work material, machining accuracy. For battery electrode, it is preferred aluminium oxide. Aluminum oxide is a ceramic, not conducting and anyway present in battery as coating of separator. Aluminum oxide size is less than 50 micron. Better to use smaller size of aluminium oxide particle in the range 12 micron. This way aluminium oxide will not be separated from fluid after filtration and can be reused again. After around 1000 cutting cycle with same abrasive particles, fluid solution can pass through filter having porosity less than 10 micron. This will remove abrasive particles from fluid. Fluid can then be mixed with new abrasive particles. Normally after every coil change, new abrasive particles can be added and used abrasive particles can be removed from fluid.

Aluminum oxide is a hard, chemically inert material that forms when aluminum interacts with oxygen. For abrasive use, aluminium oxide crystals, also known as corundum, are commonly available in white, pink and brown, differing primarily in hardness and purity. Aluminum oxide is one of the most commonly used abrasives, offering a cost-effective, predictable solution across a wide range of applications. There are different aluminium oxides are available. Aluminum oxide in different variations is the most frequently used abrasive material. It is melted from bauxite or aluminium oxide at temp. over 2000°C in electric furnaces. It is prepared from bauxite. Contains 96% Al₂O₃~3% titanium dioxide (TiO₂) and 1-2% other admixtures. It is the most resistant synthetic corundum and is characterised by its high ductility. It is used for cutting-off and rough grinding of low-alloy steels, stainless steels, cast iron, especially for high rates of stock removal.

Fluid jet cutting machines have high and ultra-high pressure pumps of 150 to 400 MPa and hyper pressure pumps of 600 to 650 MPa. Ultra-high pressure pumps of 350 to 400 MPa are standard. However their operation is essentially the same: Fluid flows from an ultra-high or hyper pressure pump, through tubing, out of a cutting head as pure fluid jet or abrasive fluid jet and it cuts the material. Fluid pump is responsible for creating the pressure and flow of water and delivering it continuously. According to the invention, a pressure of 100-150 MPa for anode and 200 MPa for cathode is needed.

Cutting head is a vital component of fuel jet cutting machine. Cutting head consists of orifice, mixing chamber and nozzle. Orifice has a very tiny hole in it. The purpose of this hole is to convert the high water pressure created by the pump to high speed water jet. Orifice has an inner diameter of 0.08 mm to 0.5 mm. Orifice is made of sapphire, ruby or diamond. Sapphire and ruby orifices are cheaper, but prone to wear and crack and due to their life time of approximately 50-100 hours they must be frequently changed. Diamond orifices have good quality, better reliability and life time of approximately 1000 hours. Mixing chamber has an inner diameter of 0.4 mm to 2 mm and is long of 38 mm to 152 mm. Nozzle is generally made of tungsten carbide (powder metallurgy product).

The most important operational parameters of nozzle are the nozzle diameter and the standoff distance, The nozzle contains one exit hole or orifices, which is normally of a much smaller size than the feed line. The labelled nozzle is generally used for the fluid jet. Since a constant volume of fluid reaches the nozzle, it must accelerate to a higher speed in order to escape through this orifice, which also serve to focus the fluid into coherent streams or jets and to direct the streams towards the required point on the target surface. The Standoff distance: is the distance between the nozzle and the target material. One of the main effective parameters that is adjusted for the different applications is the standoff distance. The standoff distance should be 5-10 mm.

According to the theory of fluid mechanics, in order to reduce energy loss of high pressure fluid from conversion of pressure head to kinetic energy, the inner surface shape of nozzle should be as close as possible to streamline connection with nozzle inlet, but this nozzle production is difficult. So the current nozzle is cylindrical cone-shaped nozzle or fully conical nozzle.

Fluid jet enters the nozzle and contacts with surrounding fluid. At the boundary of contact, a discontinuity is formed, and then it continues to travel into a mixed layer. In mixing area it mixes with abrasive particles. The central part of the fluid jet is not affected by external fluid body. It still maintaining a speed of the jet, this part is called the core area. The velocity of fluid jet is the largest at the axial position, and decreasing as it come in contact with nozzle contact. When fluid jet is close to nozzle outlet, the velocity increases most. After leaving the nozzle, there will be a constant velocity region of fluid jet. This constant velocity region has maximum speed, till it reached core. This constant velocity of jet outside core region is gradually reduced until the velocity is zero. Stand off distance should be such that core is just below the cutting zone. This way one can have maximum jet velocity for cutting.

Said arasive material is supplied to abrasive nozzle via pipe. Metering device is used to control the flow of abrasive. It is then supplied at the divergent end of chamber. As told earlier, abrasive can also enter at the entry of cutting head in convergent section. Here the entry in divergent section is preferred. There are three main factors which determine the performances of abrasive fluid jet cutting process: fluid pressure, fluid flow rate and abrasive flow rate. Thick materials require larger streams of fluid, which have greater velocity and more energy to cut. In Longitudinal cut (Slitting), Cutting head is stationary. In Notching and trimming, cutting head moves in transverse direction with respect to the electrode. Transverse speed vary based on the thickness of the material, the operating pressure, fluid flow rate, the quality and quantity of abrasive, the shape to be cut and type of edge finish desired. Cutting faster is possible by increasing pressure, fluid flow rate and abrasive mass flow rate.

In the slitting station, slitting will be done. For slitting, a longitudinal cut is given in electrode. EC with/without abrasive material is fed to fluid jet nozzle. Mixing of abrasive take place with EC in mixing chamber. As shown in setup the electrode is moving and rollers which are provided to hold the electrode are also rotating. Roller linear velocity is same as electrode speed. The fluid jet nozzle is fixed. Electrode will be cut using high velocity of fluid and abrasives. In this operation longitudinal cut separates the mother coil into smaller coils. Important is that area of electrode around fluid jet nozzle should be good clamped and stretched. Roller can additionally have spiral structure to give transverse tensile stress to electrode. Electrode is also under tension from Rewinder and unwinder. Above principle can also be used to slit separator.

In the notching station, a notching operation is done. Here there is transverse cut and this transverse cut need to be done without stopping electrode movement. For that the arrangement consist of different nozzle fixed in clamp is planned. Clamp with nozzle is connected to one movable conveyor, which is rotating horizontally at the same speed as that of movement of electrode. This means that axis of rotation for both conveyor is vertical. Water jet nozzle is in between clamps. Clamps are provided to hold the blank. Top conveyor has clamp and nozzle. Bottom conveyor has counter clamps. In counter clamps there is hole so that fluid passes to tank. Both top and bottom conveyor moves at the same speed. At the centre of conveyer one central intake chamber is provided, who will supply the pressurized fluid or a mixture of fluid and abrasive material to the nozzles. Flow control valve ensures that only nozzle doing cutting operation will be fed with pressurized fluid. Electrode coil and both (top and bottom) conveyors have no relative speed. Hence cutting is happening at zero relative speed. Top Clamp will hold the collator area to be cut. Then Nozzle will move in transverse direction and cut collector area with high velocity fluid jet. Bottom clamp holds the clamp from bottom. Clamping is done from both sides top and bottom. Nozzle is only on top side. Important here is to note that clamp and nozzle are fixed to top rotating conveyor. The function of conveyor is to have no relative movement between electrode and clamp and nozzle. Now clamp and will move down and will clamp the electrode against opposite clamp from bottom conveyor. Once electrode is clamped between moving clamps, nozzle will follow the cutting contour inside the clamps and cut the collector shape. Scrap after notching will move below in bottom clamp and then collected in scrap bin. It is possible that two nozzles left and right are doing notching at the same time. It means it is possible to do first notching and then slitting. This has advantage as notching of left and right will be made in same time on big width electrode and then finally electrode will be slitted in the middle. Flow control valve shown in yellow between central incoming chamber and fluid jet cutting nozzle, regulates flow of the pressurized fluid. Only Nozzle which is cutting electrode will be supplied by pressurized fluid. Other flow valves will remain closed. Fluid with cutting debris will pass from bottom clamp to tank. This will pass to filtration and then fluid and abrasive will be recirculated. Rewinder and unwinder maintain tension during notching.

The principle of notching using moving conveyor with attached clamps and fluid jet cutting head, can also be used for trimming of electrode and separator in Li-Ion battery cell. In Trimming there will be no rewinder as electrode will be trimmed into individual segments. To hold the segments firmly, vacuum is used from below. Vacuum clamps will move at the same speed as that of electrode and hold individual segments. These vacuum clamps will then transfer cut segments into magazine. Normally if trimming is not done then complete coil with slitted and notched electrode, will be placed in oven for drying, It is done at around 120°C for 24 hours. If trimming is done then magazine of individual segment is placed in oven. For separator is fluid jet cutting of great advantage. Separator is made of three layers of polypropylene with aluminium oxide coating outside. Laser cutting cannot be used as Polypropylene will change its properties under heat. Mechanical cutting by tool is difficult as aluminium oxide causes high wear. Fluid jet cutting with aluminium oxide abrasive is more preferred to trim separator. Separator cannot be dried extensively as in electrode and hence EC as fluid medium and aluminium oxide as abrasive is preferred. Process of trimming is explained in next slide.

In the trimming operation, the conveyor moves up and down at the same speed as that of electrode. Top conveyor has clamps and fluid jet cutting head (nozzle). Bottom conveyor has vacuum clamps. It also has opening for fluid to exit to tank after cutting. Both conveyors in trimming unlike notching are rotating vertically. It means rotation axis is horizontal. Top clamp in top conveyor and bottom clamp in bottom conveyor ae always parallel to each other. Fluid with cutting debris will be collected in tank. This will be filtered and recirculated in system. Top clamps enter already notched area for the accurate location so trimming cutting head is accurately positioned. There is no relative movement between electrode and clamps and nozzle. This is important so that trimming takes place accurately. Fluid is transported to individual nozzle over central fluid station. There are valves at each nozzle to control the flow of pressurized fluid. Only Nozzle doing cutting will get pressurized fluid. Always one nozzle is cutting at one time. Other nozzles are inactive. Individual trimmed stations are held by bottom clamps by vacuum and then transported to magazine. Once electrode or separator is above magazine, vacuum will be released and segment will fall in magazine.

After leaving the cutting zone, the fluid contains cutting debris. Normally in battery electrode cutting debris (scrap) are non-magnetic. For examples, debris will have copper, aluminium, binders like (SBR for anode) and (PTFE for cathode), graphite, conductive carbon and oxides of nickel, manganese and cobalt. Debris have different weight and one thing which is advantageous is that they are insoluble in EC (Ethylene carbonate) and may be in conjunction with DEC and PC (diethylene carbonate and polypropylene carbonate), which are used as fluid medium. Magnetic catcher would not help here much to remove cutting debris. As cutting debris are having different weight, one can use centrifugal cleaning process. Centrifugal cleaning process is done in two steps. In first step heavy particles like metal and oxide will be removed. In second centrifugal cleaning process lighter particles like graphite and binder will be segregated. Coarse filtration is the first step where particles bigger than 0.5 mm will be captured. Last station is a Hepa-filter which has opening of less than micros, where smallest cutting debris will be separated from electrolyte. Cleaned electrolyte will be circulated back in the system. Abrasive particles are smaller in size around 20 micron and hence will remain in fluid.

EC with or without abrasives and with cutting debris can be fed into the centrifugal filter. It is rotated at high speed. Due to centrifugal force heavier particles are forced outward and will be collected in the filter. Electrolyte will be filtered and will be collected in the zone outside filter. Filter will be changed once it is heavily contaminated.

In the cleaning process, a brush or a roller is contacted on the cutting edge. This reduces the adhesion of particle to cutting edge. Particle can be sucked off easily in second contactless stage. Contact cleaning is less required for fluid jet cutting as high speed jet does not permit particle to stick on cutting edge. In an alternative embodiment, ionized air is blown, which neutralize non conducting particle. Neutralized conducting particle can be sucked from electrode surface. It is necessary to remove static charge on abrasive particle, as they are nonconducting so that they can be removed from cutting edge and electrode surface.

In the following, the most important features of the invention are listed: Fluid jet cutting process for slitting, notching and trimming to substitute laser cutting and mechanical cutting by cutters for electrode and separator. One of the electrolyte constituent ethylene carbonate (EC) is used as fluid medium. It can be added with Diethylene carbonate (DEC) or polypropylene carbonate (PC). It can also be used single in molten stage. In that case complete flow path of EC should be heated up to 45 - 50°C. Fluid jet cutting can take place without abrasives. It can also be done with abrasive. Here Aluminum oxide is suggested for abrasive particles. Slitting is modified so that rollers can give longitudinal and transverse stretch to electrode area close to fluid jet cutting head. Notching and trimming is modified such that electrode can move continuously during cutting operation. Fluid jet cutting is attached to the moving conveyer. Pressurized fluid is fed to the cutting head by central intake chamber. Clamp around cutting nozzle clamps the electrode during notching. Clamps and fluid jet nozzle move at the same speed as that of electrode. It is even advantageous to do slitting after notching so that two collector areas can be notched at the same time. Two stage Centrifugal cleaning process is suggested to remove cutting debris. This will clean fluid and hence fluid (EC) can be reused again. Drying suggested is coil drying in oven after slitting and notching. Magazine drying after trimming. Oven temperature is up to 120-150°C. ) Air entrapped from fluid has to be removed. Air removal is done in storage tank. Air should be prevented from entering high pressure system. Electrode in fluid jet cutting is always under clamped condition. In slitting by rotating roller. In notching and trimming by moving clamps. Drying and cleaning of electrode is necessary to remove particle contamination. Drying is done by roll to roll baking process after cleaning. Edge cleaning is done by contact and contactless method. Even If fluid (EC) enters porosity in active material then also it is not harmful. Nozzle can be cylindrical or conical. It is important that standoff distance should be such that highest velocity of fluid jet is available at the cutting zone. No need of air suction as in laser to suck gases generated during cutting. There is no heat generation in fluid jet cutting. Abrasive aluminium oxides can be used again if they are sharp. Filtration in such case will be more simple. Here debris bigger than the size of abrasive will be collected by filter. Fluid with abrasive will be circulated back in system for cutting cycle. There is danger that debris smaller than the size of debris can remain in the fluid. Normally fine filtration will take place before next coil change. All abrasives will be removed and new abrasives will be added. It is suggested to work with abrasive of size 20 micron. Centrifugal filtering can remove particles more than 50 microns. Separator can be slitted and trimmed in the same way as electrode.

One additional option is to use water as fluid medium. Here water can be used alone or with abrasive particles. Water jet cutting or water abrasive jet cutting process is similar to fluid jet cutting explained earlier. Main difference will be in the drying of electrode. Drying is very intensive and here it is suggested to use roll - to roll drying by Infrared heating. After slitting and notching electrode will be wounded back in rolls. Before rewinding after notching, electrode foil passes between infrared heater. This can increase the temperature of electrode and especially cutting edge to around 120° C. This would remove water present on electrode and on cutting edge. It is important to have good suction to absorb water vapor generated by Infrared heating. After Heating, electrode passes through cleaning. This cleaning is similar to that also for fluid jet cutting. In fluid jet cutting drying is done after cleaning. In water jet cutting drying is done after cleaning. In fuel jet cleaning complete roll is placed in oven for drying. In water jet cutting drying is done by roll-roll backing process. Normally, electrolyte is expensive and hence should be filtered and reused. It need four steps filtration process explained earlier. Here filtration process can be optional and is needed only if water will be reused.

Further aspects of the invention are highlighted in detail below: In a technical implementation, for example, the active material ribbon can be unwound from an unwinding reel and guided over a processing path in the production direction through the longitudinal cutting station. Subsequently, the active material ribbon can be wound onto a take-up reel. A stationary liquid jet cutting nozzle can be positioned in the longitudinal cutting station. This can cut the active material ribbon guided along the processing path into the two strip-shaped ribbon segments. The two strip-shaped ribbon segments can be easily wound onto a common take-up reel.

A flawless cutting process in the slitting station is of great importance. For this reason, the active material ribbon can run along the processing path through a nip of at least one pair of stretching rollers. The pair of stretching rollers can stretch or smooth the active material ribbon during the cutting process. Preferably, pairs of stretching rollers are arranged on both sides of the longitudinal section upstream and/or downstream of the liquid jet cutting nozzle.

Preferably, the profiling station and/or the cutting station of the cutting system can be realised as follows: The active material ribbon can be unwound from an unwinding roll and guided over a processing path in the production direction through the profiling station and/or through the cutting station. Especially in the profiling station, the processed active material ribbon can be wound onto a take-up reel. The profiling station and/or the cutting station may comprise at least one cutting unit with at least one liquid jet cutting nozzle. The cutting unit may be mounted on a conveyor by means of which the cutting unit is adjustable in the direction of production. In this way, at least during the cutting process, the cutting unit can be motion-coupled to the active material ribbon. The cutting unit and the active material ribbon can therefore move at the same conveying speed along the processing path.

In a further development, the cutting unit can additionally have a feed means. The feed means can move the liquid jet cutting nozzle during the cutting process in a feed movement that is superimposed on the conveying movement. The feed movement can be transverse and/or longitudinal to the direction of production.

A perfect cutting process in the profiling station and/or in the cutting station is of great importance: For this purpose, the cutting unit can additionally have a hold-down device or element. The hold-down element can cooperate with a counter contour element. During the cutting process, the hold-down presses the active material ribbon onto the counter contour. At least during the cutting process, the counter contour can be guided in the production direction in a motion-coupled manner with the hold-down device as well as with the liquid jet cutting nozzle and the active material ribbon.

In a preferred technical realisation, the cutting system can have a conveyor device on both sides in the thickness direction of the active material ribbon: The liquid jet cutting nozzle, the hold-down device and the feed means are assigned to the first conveyor device. The counter contour is assigned to the second conveyor.

After the cutting process, a cutting residue remains on the counter contour. This can be discharged in the direction of the material scrap.

In the length cutting station, the active material ribbon is cut to individual active material layers. In order to ensure a perfect cutting process in the cutting station, the following measures are preferred: the counter contour can have at least one suction opening connected to a vacuum source. This allows the active material ribbon and/or the cut active material layer to be brought into suction contact with the counter contour. The conveying device can convey the counter contour, on which a layer of active material is in suction contact, to a deposit position. In the deposit position, the suction contact can be deactivated. In this way, the layer of active material can be released from the counter contour under the effect of gravity and automatically transferred to a deposit station.

According to the invention, the liquid jet cutting nozzle can be integrated in a liquid circuit. In the liquid circuit, the cutting liquid discharged after the cutting process can be cleaned in a cleaning system. The cleaned cutting fluid is then returned to the liquid jet cutting nozzle. Each of the liquid jet cutting nozzles can be preceded by a control valve (viewed in the direction of flow). The control valve can be controlled by means of an electronic control unit. The control unit can open the control valve associated with the liquid jet cutting nozzle required for a current cutting operation. In contrast, the control valves of the liquid jet cutting nozzles not required for the current cutting process can remain closed.

In one specific embodiment, a number of cutting units can be assigned to the conveyor. These can be conveyed in a row one after the other along the processing path with the aid of the conveyor device. The conveyor can preferably be an endless conveyor belt.

In order to increase the processing speed in the profiling station, the following measures are possible: at least one cutting unit can be arranged on both sides of the active material ribbon in the transverse direction of the active material ribbon. The two cutting units can each be moved along the processing path with their own conveyor device. In this way, one cutting process can be carried out simultaneously on each of the two longitudinal edges of the active material ribbon.

To increase process reliability, the blank holder (i.e. the hold down element) in the cutting station can be designed as follows: The blank holder can have a positioning projection on its contact surface facing the active material ribbon. Before, during and/or after the cutting process, the positioning projection of the blank holder is in positioning engagement with a recess of the active material ribbon that has been created in the profiling station.

An example of an embodiment of the invention is described below with reference to the accompanying figures, in which
- Figure 1: shows a block diagram a process sequence for the production of the active material layers;
- Figures 2 to 9: each show a different view of the cutting system of the process arrangement.

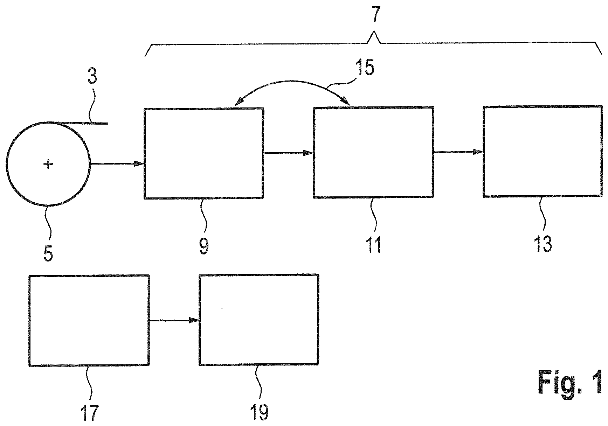

Figure 1 shows a block diagram of a process sequence for producing active material layers 1, for example electrode layers or separator layers for a lithium-ion battery cell. Accordingly, an active material ribbon 3 is first provided on a reel 5. The active material ribbon 3 is fed in a continuous process in a production direction FR through a cutting unit 7. In Figure 1, this consists of a longitudinal cutting station 9, a profiling station 11 and a cutting station 13. If necessary, the profiling station 11 can be arranged in front of the longitudinal cutting station 9 as seen in the production direction FR, as indicated by the double arrow 15. Downstream of the cutting station 7, in terms of process technology, is a cleaning station 17, in which the produced active material layers 1 are cleaned. This is followed by a drying plant 19 in which the cleaned active material layers 1 are dried. The essence of the invention is that the cutting operations in the cutting system 7 are all carried out with the aid of liquid jet cutting. For this purpose, the cutting system 7 has liquid jet cutting nozzles 21 as cutting elements.

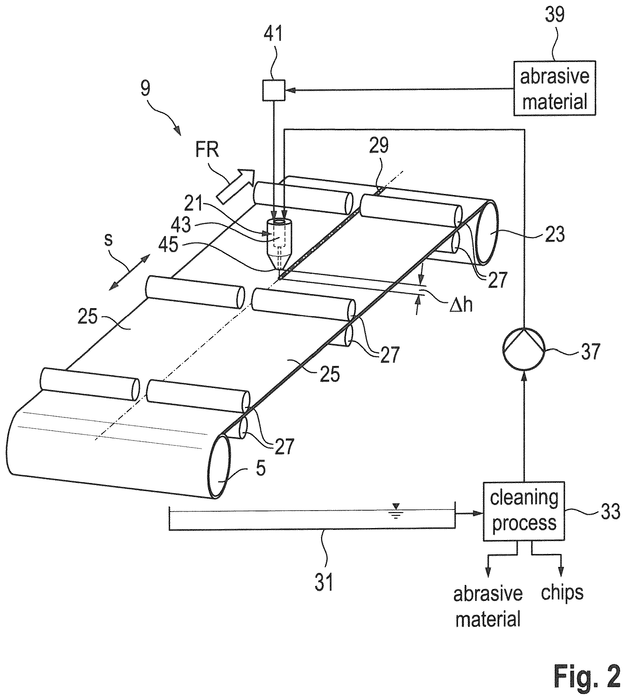

Figure 2 shows an example of the slitting station 9 (longitudinal cutting station). Accordingly, the active material ribbon 3 is unwound from the unwinding reel 5 and guided over a processing path s in the production direction FR through the longitudinal cutting station 9. Subsequently, the processed active material ribbon 3 is wound up on a take-up reel 23. A stationary liquid jet cutting nozzle 21 is located in the longitudinal cutting station 9. The liquid jet cutting nozzle 21 cuts the active material ribbon 3 guided along the s into two strip-shaped ribbon segments 25. The two strip-shaped ribbon segments 25 are wound together onto the take-up reel 23.

In order to ensure a proper cutting process, the longitudinal cutting station 9 has stretching roller pairs 27. The active material ribbon 3 runs along the processing path s through nip gaps of these stretching roller pairs 27. As a result, the active material ribbon 3 is stretched or smoothed during the cutting process. As can be seen from Figure 1, the stretching roller pairs 27 are arranged on both sides of the generated longitudinal section 29 both upstream and downstream of the liquid jet cutting nozzle 21.

As can be seen in Figure 1, the liquid jet cutting nozzle 21 is integrated in a liquid circuit. In the liquid circuit, the liquid discharged after the cutting process is collected in a liquid sump 31 and discharged from there into a cleaning system 33. The cleaning system33 may have a centrifuge in which the liquid is separated from the abrasive material as well as from the cutting chips. The cleaned liquid is then fed back towards the liquid jet cutting nozzle 21 by means of a feed pump 37. According to Figure 2, an abrasive material container 39 is associated with the liquid jet cutting nozzle 21. From the abrasive material container 39, abrasive material is dosed into a mixing chamber 43 of the nozzle 21 with the aid of a dosing unit 41. In the mixing chamber 43, the abrasive material is mixed with the cutting fluid. The cutting fluid then exits at the nozzle head 45 to cut the active material ribbon 3. The nozzle head 45 is spaced from the surface of the active material ribbon 3 in Figure 1.

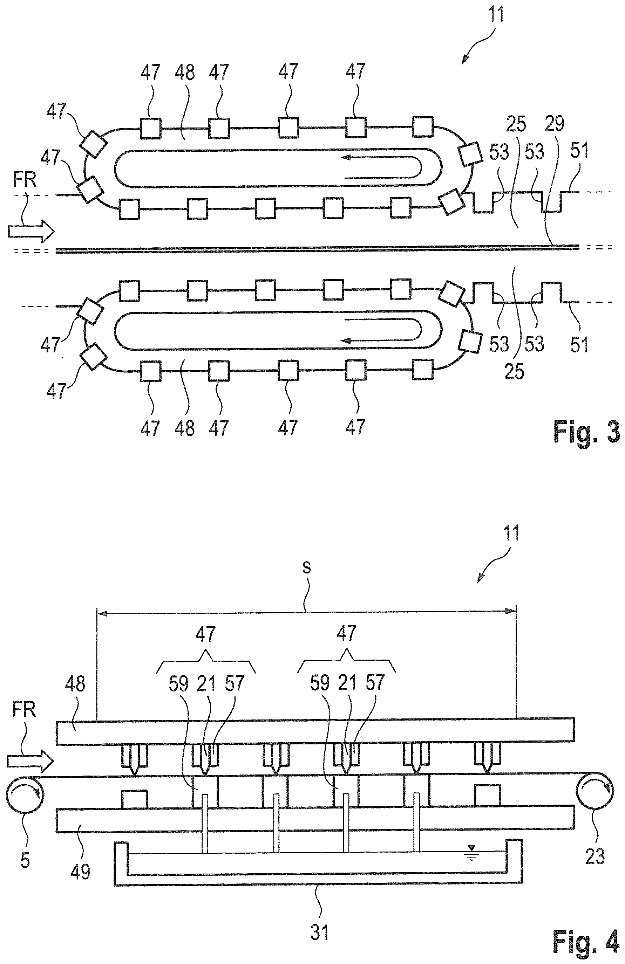

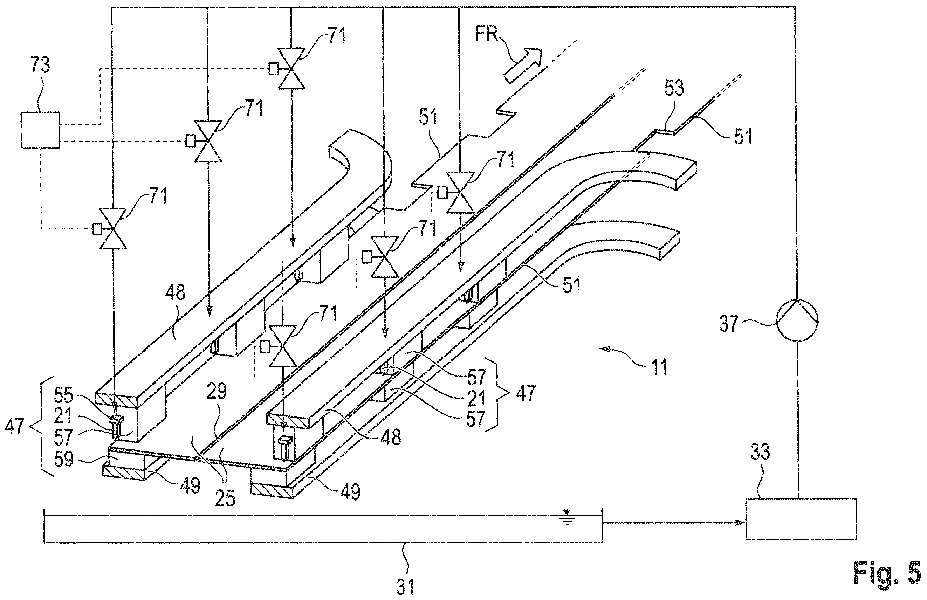

Figures 3 to 6 show different views of the profiling station 11. Accordingly, in Figure 4 the active material ribbon 3 is unwound from an unwinding reel 5 and guided in the production direction FR over a processing path s through the profiling station 11. The active material ribbon 3 processed in the profiling station 11 is then wound up again on a take-up reel 23.

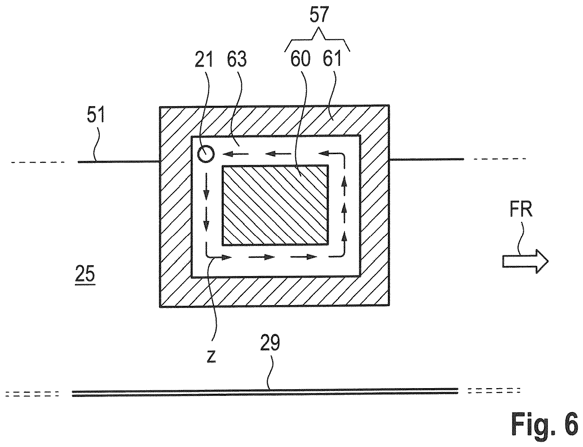

In Figures 3 to 5, a plurality of cutting units 47 are provided, which are guided in series one behind the other along the processing path s by means of conveyor belts 48, 49 motion-coupled with the active material ribbon 3. The cutting units 47 are arranged on both sides of the active material ribbon 3 in the transverse direction of the active material ribbon 3. In this way, a cutting process can be carried out simultaneously on both longitudinal edges 51 of the active material ribbon 3 in the cutting processes. An example of a cutting process is shown in Figure 6 in a view from above. In the cutting processes, edge-side current-collecting recesses 54 are cut into the two longitudinal edges 51 of the active material ribbon.

In Figures 3 to 5, each of the cutting units 47 is formed by a liquid jet cutting nozzle 21, a feed means 55, a hold-down 57 and a counter contour 59 cooperating therewith. The liquid jet cutting nozzle 21, the feed means 55 and the hold-down device 57 are conveyed by means of an upper conveyor belt 48. In contrast, the counter contour 59 is conveyed by means of a lower conveyor belt 49. In Figure 4 (viewed in the thickness direction of the active material ribbon 3), an upper and a lower conveyor belt 48, 49 are arranged on both sides of the active material ribbon 3.

During the cutting process, the feed means 55 can move the liquid jet cutting nozzle 21 with a feed movement z transversely and/or longitudinally to the manufacturing direction FR, as indicated by movement arrows in Figure 6. The feed movement z is superimposed on the conveying movement in the production direction FR.

As can be seen in Figure 6, the hold-down 57 of the cutting unit 47 can be made in two parts, namely an inner hold-down 59 and an outer hold-down 61. The inner hold-down 59 holds the cutting residue, while the outer hold-down 61 draws around the produced recess 53. A nozzle alley 63 is formed between the inner hold-down 59 and the outer hold-down 61, along which the feed movement z of the liquid jet cutting nozzle 21 takes place. In the profiling station 11, the upper conveyor belt 48 runs around a vertical axis, while the lower conveyor belt 49 runs around a horizontal axis. After the cutting process has been completed, a cutting residue remains on the counter contour 59. The cutting residue is discharged in the direction of the material scrap.

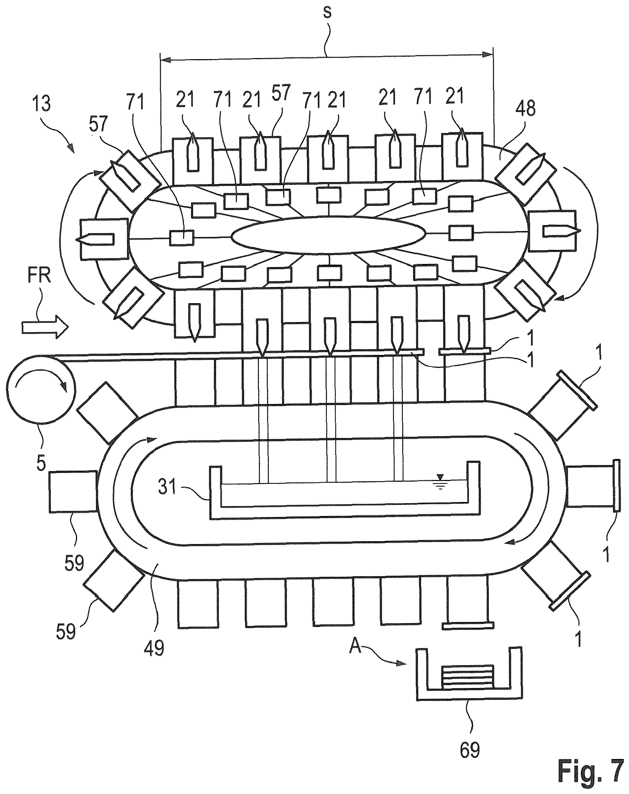

In the following, figures 7 to 9 describe the cutting station 13 in different views: Accordingly, in Figure 7 the active material ribbon 3 is unwound from an unwinding reel 5 and guided in the production direction FR over a processing path s through the cutting station 13.

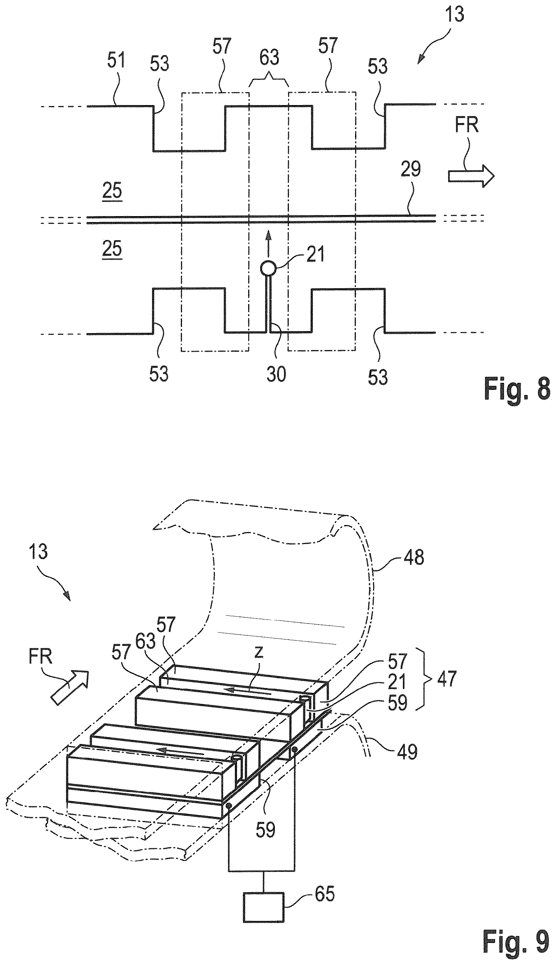

According to Figures 7 and 9, a plurality of cutting units 47 are provided, which are guided in series one after the other along the processing path s by means of conveyor belts 48, 49 motion-coupled with the active material ribbon 3. The cutting units 47 of the profiling station 11 and the length cutting station 13 are basically of the same design and function. An example of a length cutting process is shown in Figure 8 in a view from above. In the length cutting processes, the active material ribbon 3 is cut through by means of a cross-section 30 (Figure 8), forming the active material layers 1.

In Figure 9, each of the cutting units 47 is formed by a liquid jet cutting nozzle 21, a feed means (not shown), a hold-down device 57 and a counter-contour 59 cooperating therewith. The liquid jet cutting nozzle 21, the feed means 55 and the hold-down means 57 are conveyed by means of an upper conveyor belt 48. In Figure 9, an upper and a lower conveyor belt 48, 49 are arranged on both sides of the active material ribbon 3 (viewed in the thickness direction of the active material ribbon 3).

During the length cutting process (Figure 8), the feed means can move the liquid jet cutting nozzle 21 with a feed movement z transverse to the production direction FR, as indicated in Figure 9. The feed movement z is superimposed on the feed movement in the production direction FR.

As can be further seen from Figure 8 or 9, the hold-down 57 of the cutting unit 47 can be made in two parts, the two hold-downs being positioned respectively upstream and downstream of the cross-section 30, as viewed in the manufacturing direction FR, by means of movement arrows. A nozzle alley 63 is formed between the two hold-downs, along which the feed movement z of the liquid jet cutting nozzle 21 takes place. In the profiling station 11, the upper conveyor belt 48 runs around a vertical axis, while the lower conveyor belt 49 runs around a horizontal axis. After the cutting process has been completed, a cutting residue remains on the counter contour 59. The cutting residue is discharged in the direction of the material scrap.

In contrast to the profiling station 11, the counter contour 59 in the length cutting station 13 has at least one suction opening connected to a vacuum source 65 (Fig. 9). By means of the suction opening, the active material ribbon 3 and/or the active material layer 1 is in suction contact with the counter contour 59. In the cutting station 13, the profiled ribbon segments 25 of the active material ribbon 3 are cut to length to form the individual active material layers 1. As can be seen in Figure 9, the lower conveyor belt 49 conveys the counter contours 59 to a deposit position A. In the deposit position A, the suction contact of the counter contour 59 is deactivated. In this way, the layer of active material 1 can fall automatically into a deposit station 69 under the effect of gravity.

In Figure 7, the liquid jet cutting nozzles 21 are also integrated in a fluid circuit which is basically designed like the fluid circuit described in Figure 2. In addition, a control valve 71 is assigned to each of the liquid jet cutting nozzles 21 in Figure 7. The control valves 71 of all liquid jet cutting nozzles 21 can be controlled by means of an electronic control unit 73. During the cutting process, the control unit 73 opens the control valve 71 of the liquid jet cutting nozzle 21 required for the cutting process. The control valves 71 of the liquid jet cutting nozzles 21 not required for the cutting process remain closed.

As can be seen in Figure 8, the downholder 57 of the cutting station 13 also has a nozzle lane 63 along which a feed movement z of the liquid jet cutting nozzle 21 takes place. In addition, the hold-down 57 is formed with a positioning projection, which is not shown, on its contact surface facing the active material ribbon 3. The positioning projection of the hold-down 57 is in positioning engagement with a recess 53 of the active material ribbon 3 created in the profiling station 11 before, during and after the cutting process. In this way, a positionally secure cutting process and a positionally secure depositing process are made possible.

### List of reference signs

- 1: Active material layers
- 3: Active material ribbon
- 5: Unwind reel
- 7: Cutting system
- 9: Longitudinal station
- 11: Profiling station
- 13: Length cutting station
- 15: Double arrow
- 17: Cleaning system
- 19: Drying plant
- 21: Liquid jet cutting nozzles
- 23: Take-up reel
- 25: Ribbon segments
- 27: Roller pairs
- 29: Longitudinal section
- 30: Cross-section
- 31: Liquid sump
- 33: Cleaning system
- 37: Pump
- 39: Abrasive material container
- 41: Dosing unit
- 43: Mixing chamber
- 45: Nozzle head
- 47: Cutting unit
- 48, 49: Conveyor belts
- 51: Longitudinal edges
- 53: Recesses
- 55: Feed means
- 57: Hold-down element
- 59: Counter contour element
- 60: Inner hold down element
- 61: Outer hold-down element
- 63: Nozzle Lane
- 65: Vacuum source
- 69: Storage station
- 71: Control valve
- 73: Electronic control unit
- FR: Production direction
- s: Machining distance
- A: Storage position
- z: Drive route
- Δh: Height offset

## Claims

1. Process arrangement for producing active material layers (1), for example electrode layers or separator layers, for a lithium-ion battery cell, in which an active material ribbon (3) can be guided in a continuous process in a production direction (FR) through a cutting system (7) which has a longitudinal cutting station (9), in which the active material ribbon (3) can be divided into strip-shaped ribbon segments (25) in the transverse direction of the active material ribbon (3), a profiling station (11), in which recesses (53), for example edge-side current collecting recesses, are cut into the active material ribbon (3), and/or a length cutting station (13), in which the active-material ribbon (3) is cut to form individual active-material layers (1), **characterized in that** the cutting operation in the cutting system (7) is carried out by liquid-jet cutting, and **in that** the cutting system (7) has liquid-jet cutting nozzles (21) as cutting elements.

2. Process arrangement according to claim 1, **characterised in that** the active material ribbon (3) is unwound from an unwinding reel (5) and is guided along a processing path (s) in the production direction (FR) through the longitudinal cutting station (9), and is then wound onto a winding reel (23), and **in that** the longitudinal cutting station (9) has a stationary liquid jet cutting nozzle (21) which cuts the active material ribbon (3) guided along the processing path (s) into at least two strip-shaped ribbon segments (25), and **in that** in particular the two strip-shaped ribbon segments (25) are wound onto a common take-up reel (23).

3. Process arrangement according to claim 2, **characterized in that** the active material ribbon (3) runs along the processing path (s) through the nip of at least one pair of stretching rollers (27) which stretch or smooth the active material ribbon (3) during the cutting process, and **in that** stretching roller pairs (27) are preferably arranged on both sides of the longitudinal cut (29) upstream and/or downstream of the liquid jet cutting nozzle (21).

4. Process arrangement according to one of the claims 1 to 3, **characterized in that** the active material ribbon (3) is unwound from an unwinding reel (5) and is guided over a processing path (s) in the production direction (FR) through the profiling station (11) and/or the length cutting station (13), and **in that** in particular the active material ribbon (3) is subsequently wound onto a winding reel (23), and **in that**, in particular, the profiling station (11) has at least one cutting unit (47) with at least one liquid jet cutting nozzle (21) which, at least during the cutting operation, is motion-coupled to the active material ribbon (3) by means of a conveying device (48, 49), so that the cutting unit (47) and the active material ribbon (3) move along the processing path (s) at the same conveying speed.

5. Process arrangement according to claim 4, **characterized in that** the cutting unit (47) has a feed means (55) with which the liquid jet cutting nozzle (21) is fed during the cutting operation in a feed movement (z) superimposed on the conveying speed transversely and/or longitudinally to the manufacturing direction (FR), specifically for carrying out the longitudinal cut (29) and/or a cross section (30).

6. Process arrangement according to claim 4 or 5, **characterized in that** the cutting unit (47) has a hold-down device (57) which presses the active material ribbon (3) onto a counter-contour (59) during the cutting operation, and **in that**, in particular during the cutting operation, the counter-contour (59) is guided in a movement-coupled manner with the hold-down device (57) in the production direction (FR), and **in that**, in particular, the cutting system (7) has, in the thickness direction of the active material ribbon (3), a conveying device (48, 49) on each side, of which the liquid jet cutting nozzle (21) and, if appropriate, the hold-down device (57) and the feed means (55) are assigned to the first conveying device (48), and the counter-contour (59) is assigned to the second conveying device (49).

7. Process arrangement according to claim 6, **characterised in that**, after the cutting process has been completed, a cutting residue remains on the counter contour (59) which can be discharged in the direction of the material scrap.

8. Process arrangement according to one of the preceding claims, **characterised in that** in the cutting station (13) the counter contour (59) has at least one suction opening connected to a vacuum source (65), by means of which the active material ribbon (3) and/or the active material layer (1) can be brought into suction contact with the counter contour (59), and **in that** the conveying device (48, 49) conveys the counter contour (59) with the active material layer (1) in suction contact into a deposit position (A) after the cutting process has been completed, and **in that**, in particular, in the deposit position (A) the active material layer (1) can be deposited into a deposit station (69) with deactivated suction contact and/or under the effect of gravity.

9. Process arrangement according to one of the preceding claims, **characterised in that** the liquid jet cutting nozzle (21) is integrated in a liquid circuit in which the liquid discharged after the cutting process is cleaned in a cleaning system (33) and is then fed back to the liquid jet cutting nozzle (21), and **in that**, in particular, each of the liquid jet cutting nozzles (21) is assigned a control valve (71) which can be actuated by means of a control unit (73), and **in that** the control unit (73) opens the control valve (71) of the liquid jet cutting nozzle (21) required for the cutting operation, while the control valves (71) of the liquid jet cutting nozzles (21) not required for the cutting operation remain closed.

10. Process arrangement according to one of the preceding claims, **characterised in that** a plurality of cutting units (47) is associated with the conveyor device (48, 49), which are conveyed in series one after the other by means of the conveyor device (48, 49), and/or **in that** the conveyor device (48, 49) is an endless conveyor belt.

11. Process arrangement according to one of the preceding claims, **characterised in that** at least one cutting unit (47) is arranged in the profiling station (11) in the transverse direction of the active material ribbon (3) on both sides of the active material ribbon (3), and **in that** in particular the two cutting units (47) are each conveyed with their own conveying device (48, 49) along the processing path (s), so that a cutting operation can be carried out simultaneously on both longitudinal edges (51) of the active material ribbon (3).

12. Process arrangement according to one of the preceding claims, **characterised in that**, in the length cutting station (13), the hold-down device (57) has, on its contact surface facing the active material ribbon (3), a positioning projection which can be brought into positioning engagement with a recess (53) in the active material ribbon (3) produced in the profiling station (11) before, during and/or after the cutting operation.
